# EUROPÄISCHE PATENTSCHRIFT

(11) **EP 2 913 201 B1**
(45) Veröffentlichungstag und Bekanntmachung des Hinweises auf die Patenterteilung: **19.10.2016**
(21) Anmeldenummer: 15000335.8
(22) Anmeldetag: 05.02.2015
(51) Int. Cl.: B60B 33/00, B60B 33/02

(54) **Einradrolle**
Single wheel roller
Rouleau à galet simple

(30) Priorität: 27.02.2014 DE 102014002610
(43) Veröffentlichungstag der Anmeldung: 02.09.2015
(73) Patentinhaber: Steinco Paul vom Stein GmbH, 42929 Wermelskirchen (DE)
(72) Erfinder: Rödel, Thorsten, 42929 Wermelskirchen (DE)
(74) Vertreter: Ostriga Sonnet Wirths & Vorwerk

(56) Entgegenhaltungen:
- DE-U1- 9 013 150
- GB-A- 2 357 242
- US-A1- 2006 273 538

## Beschreibung

Die Erfindung betrifft eine Einradrolle mit einem Tragteil, im Wesentlichen bestehend aus einem Kopfteil und einem Fußteil, welches mindestens einen Tragschenkel aufweist, das Fußteil wenigstens eine Nabe für das Rad aufnimmt, auf der Nabe ein Fadenschutz angeordnet ist und zwischen Rad und Tragteil eine Feststellvorrichtung angeordnet ist.

Eine derartige Einradrolle ist beispielsweise aus der DE 20 2011 005 192 U1 der Anmelderin bekannt.

Darüber hinaus ist aus dem deutschen Gebrauchsmuster DE 901 31 50 ebenfalls eine Einradrolle mit einem Tragteil, im Wesentlichen bestehend aus einem Kopfteil und einem Fußteil, welches mindestens einen Tragschenkel aufweist, das Fußteil wenigstens eine Nabe für das Rad aufnimmt und zwischen Rad und Tragteil eine Feststellvorrichtung angeordnet ist, die Feststellvorrichtung im Innenraum des Tragteils zwischen wenigstens einer Innenfläche des Tragteils und mindestens einer undrehbar am Rad angeordneten Anlagefläche, die nach der Endmontage an der Feststellvorrichtung fest anliegt, befestigungsmittellos angeordnet ist, bekannt.

Diese und andere Rollen werden meist werkseitig komplett montiert und müssen dann zu einem späteren Zeitpunkt beispielsweise an Krankenhausbetten, medizinischen Geräten od. dgl. befestigt werden. Bei der Montage der komplett angelieferten Rolle ergeben sich in der Praxis jedoch immer wieder Probleme, dass der Einbauraum zwischen Rad und Tragteil zur Anordnung an der Befestigungsschraube sehr klein ist und dass es selbst mit speziell angepassten Werkzeugen problematisch und zeitaufwändig ist, die komplette Rolle an einem Fahrgestell od. dgl. zu befestigen. Vor diesem Hintergrund besteht die Überlegung, in Zukunft Rollen als Bausatz zu vertreiben.

Die Aufgabe der Erfindung besteht deshalb darin, eine neue Einradrolle zu schaffen, bei der der Montageaufwand deutlich verringert und auch vereinfacht worden ist.

Ausgehend von dem zuletzt genannten Stand der Technik ergibt sich die Lösung der Aufgabe aus den Merkmalen des Anspruchs 1.

Die erfindungsgemäße Einradrolle hat den großen Vorteil, dass eine Feststellvorrichtung bei der Montage von Tragteil und Rad im Innenraum des Tragsteils ohne jegliche zusätzliche Befestigungsmittel mit geringem Kraftaufwand betriebsbereit angeordnet werden kann. Dies vereinfacht insbesondere für den Anwender den Zusammenbau der erfindungsgemäßen Einradrolle deutlich und verbessert auch die Möglichkeiten, eine derartige Rolle als Bausatz zu vertreiben. Wesentlich ist für die erfindungsgemäße Einradrolle auch, dass die dem Rad zugeordnete Anlagefläche am Fadenschutz angeordnet ist, wodurch dieser auf einfache Weise eine zusätzliche Funktion erhält.

Eine vorteilhafte Ausführungsform der Erfindung ist dadurch gekennzeichnet, dass die Feststellvorrichtung zugleich aus einem Radfeststeller und/oder einem Richtungsfeststeller gebildet wird.

Bei einer bevorzugten Ausführungsform wird die Feststellvorrichtung aus einem Halter, einem Feststellelement und einem Feststellhebel gebildet, wobei das Feststellelement und der Feststellhebel befestigungsmittellos am Halter rastbefestigt ist. Diese Ausführungsform weist den Vorteil auf, dass die Feststellvorrichtung auf sehr einfache Weise aus drei miteinander verrastbaren Teilen montiert werden kann.

Weitere Vorteile ergeben sich daraus, dass zusätzlich auch die Festellvorrichtung befestigungsmittellos zwischen dem Tragteil und dem Fadenschutz lediglich durch die Montage des Rades am Tragteil befestigt werden kann.

Letztlich weist eine besonders bevorzugte Ausführungsform der Erfindung Tragschenkel auf, die jeweils eine Führungskulisse für die Feststellvorrichtung aufweisen, in deren Bereich die Feststellvorrichtung in den Innenraum des Tragteils teilweise einführbar und durch eine Schwenkbewegung entlang der Führungskulissen in eine definierte Endposition bewegbar ist. Durch diese sehr einfache Möglichkeit der Zuordnung von Feststellvorrichtung und Tragteil wird es dem Anwender noch weiter vereinfacht, die Montage der Feststellvorrichtung im Tragteil durchzuführen.

Weitere Vorteile der Erfindung ergeben sich aus den nachfolgenden Beschreibungen von Ausführungsbeispielen. Es zeigen:
Fig. 1 eine Seitenansicht eines Tragteils und eines Rades einer Einradrolle in Explosionsdarstellung,
Fig. 2 eine Stirnansicht des Tragteils gemäß Ansichtspfeil II in Fig. 1,
Fig. 3 eine Darstellung gemäß Fig. 1 mit teilweise am Rad angeordnetem Tragteil,
Fig. 4 eine Darstellung gemäß Fig. 1 mit am Rad verrastet angeordnetem Tragteil,
Fig. 5 eine Schnittdarstellung durch die Radachse/Radnabe,
Fig. 6 eine Darstellung gemäß Fig. 3 mit zusätzlich aufgerasteter Abdeckung,
Fig. 7 eine Explosionsdarstellung aus Radfeststeller, Tragteil und Rad,
Fig. 8 eine Schnittdarstellung durch das Tragteil sowie den Feststeller zu Beginn der Montage,
Fig. 9 eine Darstellung gemäß Fig. 6 während der Montage des Feststellers und
Fig. 10 eine Explosionsdarstellung des Feststellers.

In den Zeichnungen ist eine Einradrolle insgesamt mit der Bezugsziffer 10 bezeichnet.

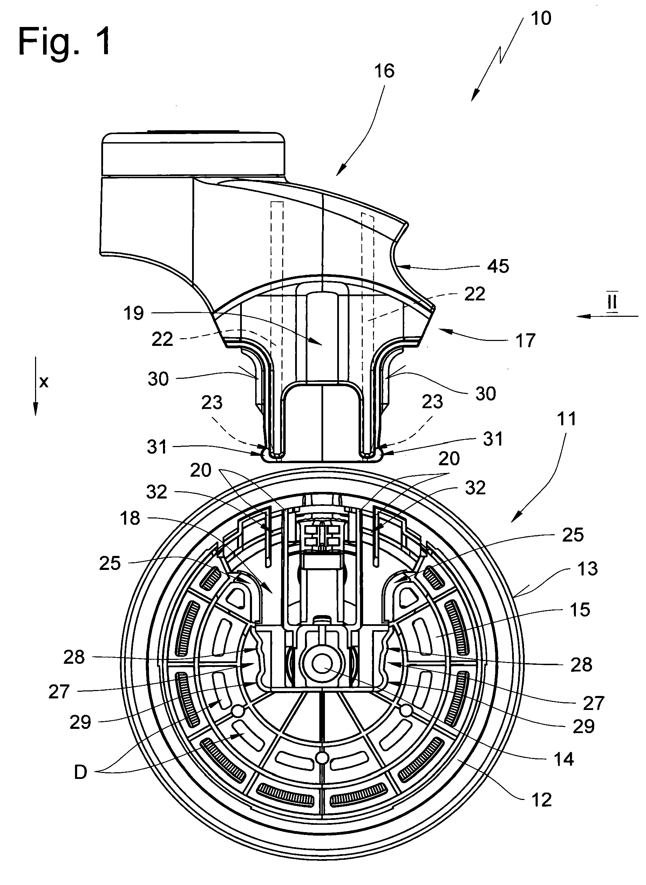

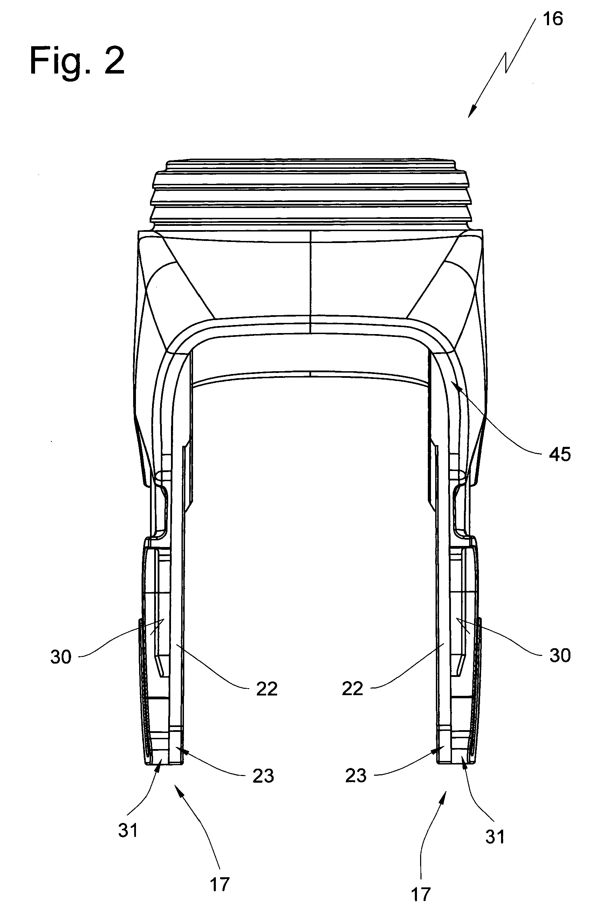

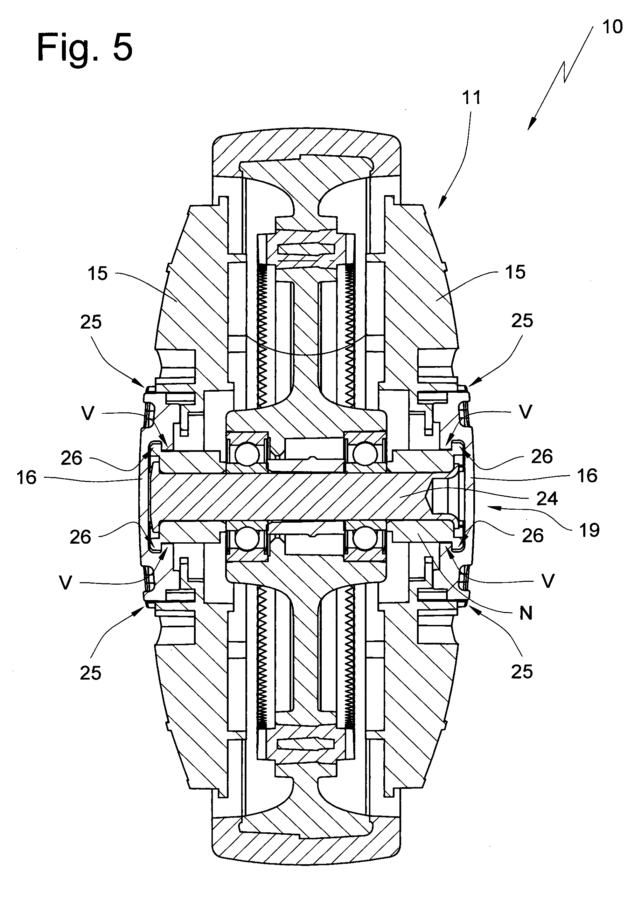

Die Einradrolle 10 weist - wie in den Fig. 1 und 2 dargestellt - ein Rad 11 mit einer Radfelge 12 auf, welche mit einer angespritzten Lauffläche 13 versehen ist. Im Bereich einer Radachse 24 (s. Fig. 5) ist das Rad 11 mittels eines Befestigungsniets 14 mit einem massiven Fadenschutzbauteil 15 versehen.

Darüber hinaus wird die Einradrolle 10 aus einem Tragteil 16 gebildet, welches zwei Tragschenkel 17 aufweist.

Der beidseitig jeweils an der Felge 12 angeordnete Fadenschutz 15 ist mit zahlreichen, materialsparenden Durchbrechungen D versehen und weist jeweils einen Befestigungsbereich 18 auf. Darüber hinaus sind die Tragschenkel 17 jeweils mit einem sogenannten Gegenbefestigungsbereich 19 versehen.

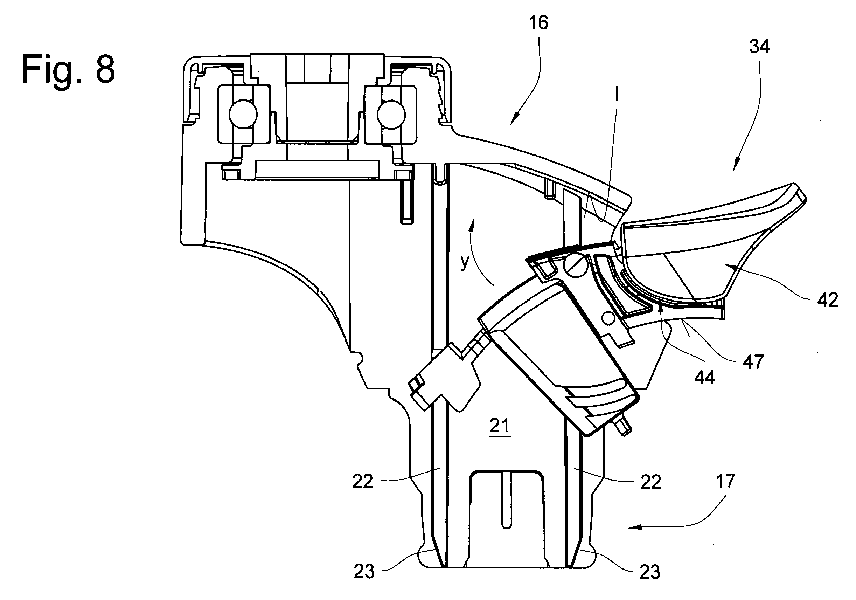

Der Befestigungsbereich 18 jedes Fadenschutzes 15 weist zunächst beabstandete Führungsrippen 20 auf, die dem zielgerichteten Einführen von an einer Innenseite 21 der Tragschenkel 17 angeordneten Führungsleisten 22 dienen, deren zum Rad 11 weisende Endbereiche Einführschrägen 23 aufweisen (s. Fig. 8).

Deutlich beabstandet oberhalb einer Radachse 24 sind beidseitig neben den Führungsrippen 20 gebogen ausgebildete Hinterschneidungsbereiche 25 angeformt. Zugleich weist ein Radnabenbauteil N parallel zu einer Einschubrichtung x des Gegenbefestigungsbereichs 19 in den Befestigungsbereich 18 beidseitig jeweils einen als überstehenden Kragen ausgebildeten weiteren Hinterschneidungsbereich 26 auf.

Der Befestigungsbereich 18 ist darüber hinaus beidseitig mit einer Führungskontur 27 versehen, welche jeweils vom unteren Rand der Radnabe N bis zum Hinterschneidungsbereich 25 verläuft. Die Führungskonturen 27 sind jeweils federnd ausgebildet und weisen eine Vorrastposition 28 und eine Endrastposition 29 auf, die nachfolgend noch erläutert werden.

Der Gegenbefestigungsbereich 19 der Tragschenkel 17 ist beidseitig mit gebogenen Verriegelungsflächen 30 und darüber hinaus beidseitig an dem zum Rad 11 weisenden Endbereich jeweils mit einem Rastvorsprung 31 versehen.

Die Fig. 1 bis 5 zeigen im Einzelnen den Vorgang des Zusammenbaus der Einradrolle 10 bzw. der Befestigung von Tragteil 16 und Rad 11 aneinander.

In der Fig. 1 erkennt man, dass zum Zwecke der Befestigung das Tragteil 16 so orientiert wird, dass die Tragschenkel 17 mit ihren Gegenbefestigungsbereichen 19 in Richtung Radnabe N zeigen.

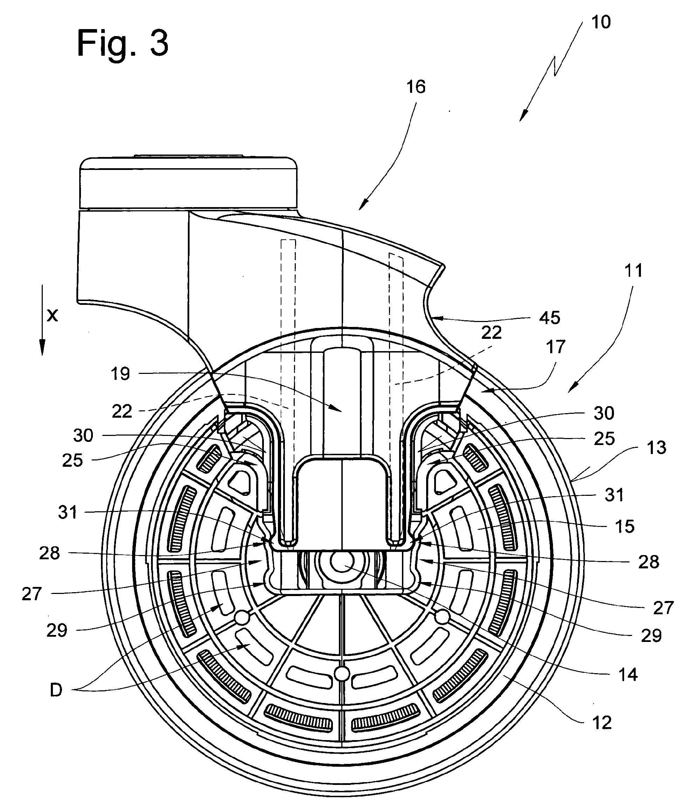

Beim Vergleich der Fig. 1 und 3 erkennt man, dass bei Bewegung des Tragteils 16 in Richtung des Rades 11 die an den Innenflächen 21 angeordneten Führungsleisten 22 unter Zuhilfenahme der Einführschrägen 23 zunächst beidseitig in einen Zwischenraum 32 zwischen den Führungsrippen 20 eingeführt werden. Dadurch ist bereits eine exakte Positionierung von dem Gegenbefestigungsbereich 19 zum Befestigungsbereich 18 sichergestellt. Durch weiteres Bewegen in Einschubrichtung x (s. Fig. 3) kommt es dann dazu, dass die Verriegelungsflächen 30 des Gegenbefestigungsbereichs 19 die gebogenen Hinterschneidungsbereiche 25 des Befestigungsbereichs 18 teilweise untergreifen, wobei die Rastvorsprünge 31 sich in der Vorrastposition 28 der Führungskonturen 27 befinden.

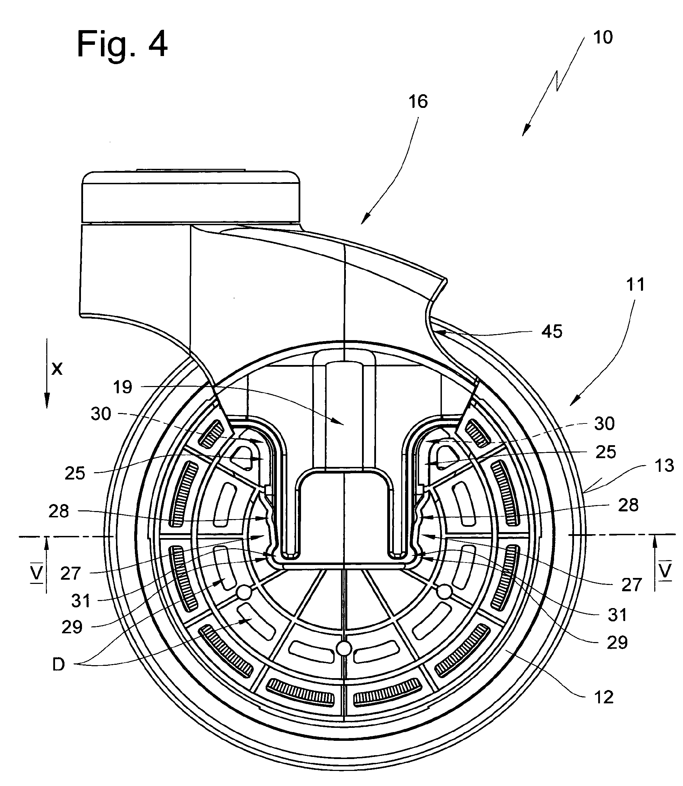

Bei weiterer Bewegung des Tragteils 16 in Richtung Rad 11 ergibt sich die Situation gemäß Fig. 4, bei der die Rastvorsprünge 31 bereits in die Endrastposition 29 eingerastet und die Verriegelungsflächen 30 großflächig unter den gebogenen Hinterschneidungsbereichen 25 angeordnet sind.

Hinzu kommt, dass - wie in Fig. 5 ersichtlich - die beidseitig der Radnabe N angeordneten Hinterschneidungsbereiche 26 jeweils von einem leistenartigen Vorsprung V des Gegenbefestigungsbereichs 19 verriegelnd untergriffen werden.

Durch die mehrfach formschlüssige Verbindung jedes Tragschenkels 17 mit dem zugeordneten Fadenschutz 15 im Bereich der beiden Hinterschneidungsbereiche 25 sowie der beiden Hinterschneidungsbereiche 26 und aufgrund der Tatsache, dass diese vier Hinterschneidungsbereiche 25, 26 voneinander jeweils deutlich beabstandet sind, ergibt sich eine sehr stabile, lastaufnehmende Verbindung zwischen dem Tragteil 16 und dem Rad 11.

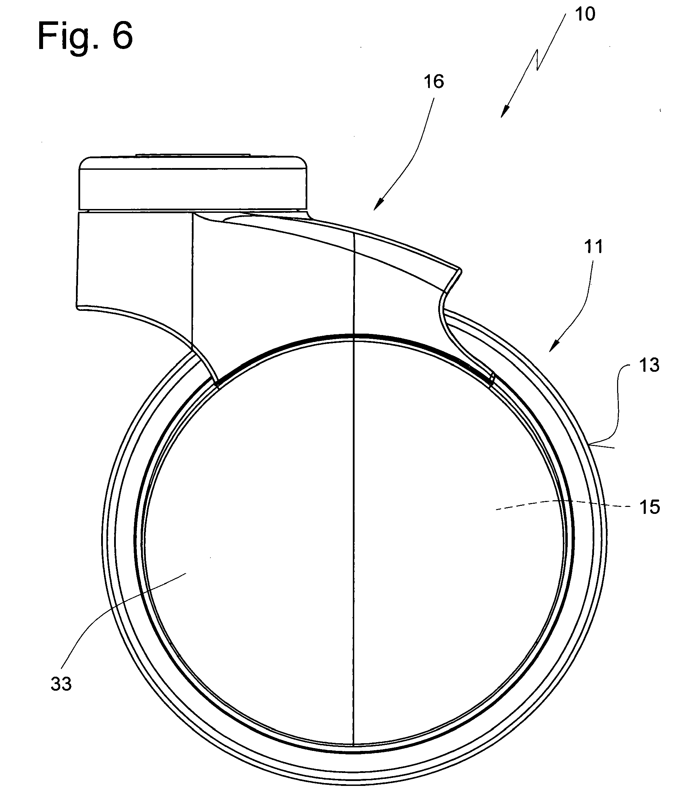

Aus der Fig. 6 ist zusätzlich ersichtlich, dass nach der Montage von Tragteil 16 und Rad 11 zusätzlich eine Abdeckung 33 am Fadenschutz 15 befestigt werden kann. Auf nicht dargestellte Weise werden hierzu jeweils im Tragschenkel 17 Rastaufnahmen eingearbeitet, in die an der Innenseite der Abdeckung 33 angeordnete, ebenfalls nicht dargestellte Rastmittel einrasten können.

Durch diese zusätzliche Anordnung einer Abdeckung 33 wird es möglich, den Fadenschutz 15 als mit zahlreichen Durchbrechungen versehenes tragendes Bauteil auszugestalten, wodurch die Herstellung dieses Bauteils deutlich vereinfacht und kostengünstiger wird und trotzdem aufgrund der Kombination mit der Abdeckung 33 die Funktion des Fadenschutzes vollständig erfüllt wird.

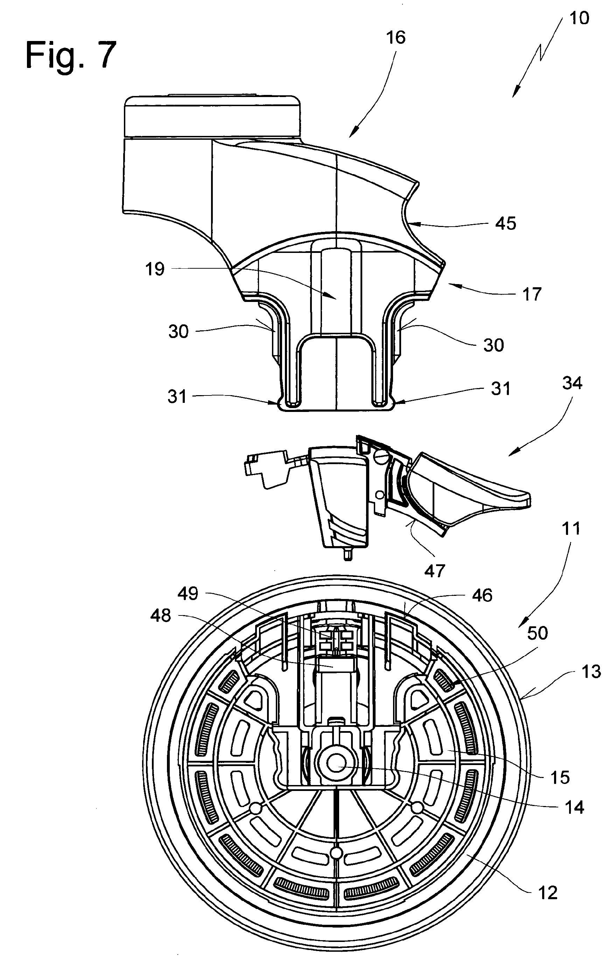

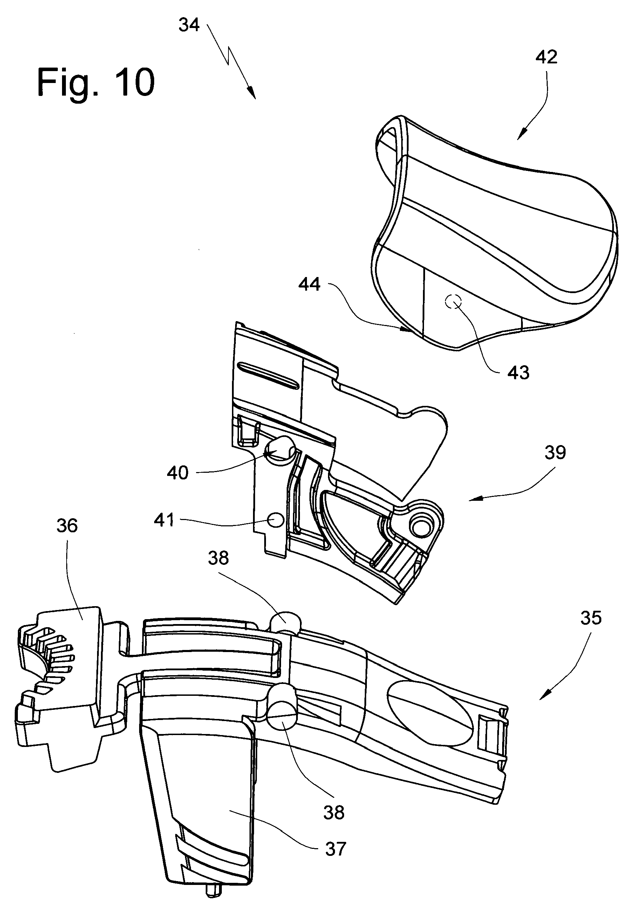

In den Fig. 7 bis 10 ist zusätzlich dargestellt, dass die bereits vorbeschriebene Einradrolle 10 mit einer Feststellvorrichtung 34 versehen werden kann. Die Feststellvorrichtung 34 wird - wie aus Fig. 10 ersichtlich
- aus einem Feststellelement 35 gebildet, welches eine Einrichtung zur Betätigung des Richtungsfeststellers 36 und zwei Einrichtungen zur Betätigung des Radfeststellers 37 aufweist.

Darüber hinaus ist das Feststellelement 35 mit zwei Rastvorsprüngen 38 versehen, welche der Befestigung eines Halters 39 dienen. Der Halter 39 weist zwei Rastöffnungen 40 auf, in denen bei Befestigung des Halters 39 am Feststellelement 35 die vorgenannten Befestigungsvorsprünge 38 einrasten.

Zusätzlich weist der Halter 39 Rastvorsprünge 41 auf, die der Befestigung eines Feststellhebels 42 dienen. Der Feststellhebel 42 ist wiederum mit gestrichelt dargestellten Rastvertiefungen 43 versehen, wodurch auf einfache Weise eine schwenkbewegliche Rastbefestigung des Feststellhebels 42 am Halter 39 möglich wird.

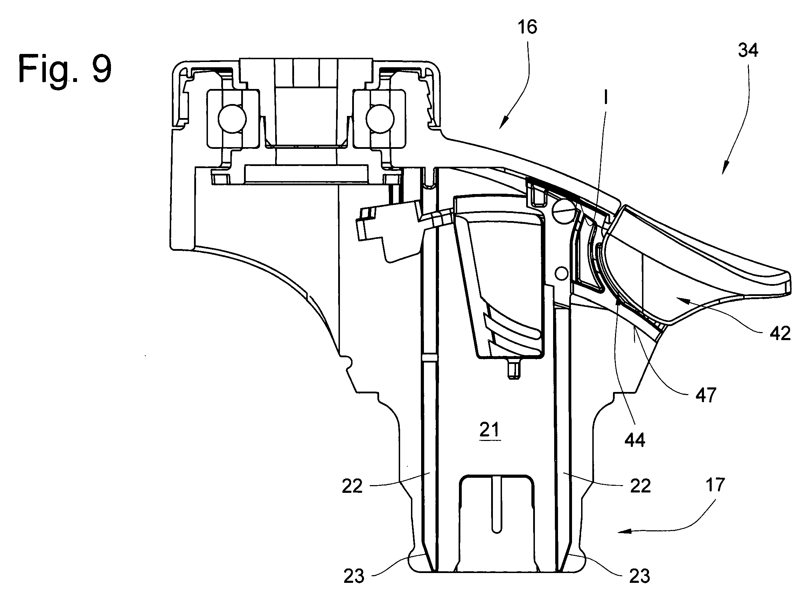

Die befestigungsmittellos miteinander verrastete Feststellvorrichtung 34, die in Fig. 7 zusammen mit dem Tragteil 16 und dem Rad 11 in Explosionsdarstellung dargestellt ist, kann nun auf einfache Weise ebenfalls befestigungsmittellos im Tragteil 16 positioniert werden. Dieser Vorgang ist in den Fig. 8 und 9 dargestellt.

In der Fig. 8 erkennt man, dass zunächst die Feststellvorrichtung 34 diagonal so in den Innenraum des Tragteils 16 eingeführt wird, bis dass beidseitig jeweils die mit 44 in der Fig. 10 gekennzeichneten Unterkanten des Feststellhebels 42 an einer bogenförmigen Kontur 45 des Tragteils 16 (s. Fig. 1) anliegen. Danach wird durch eine bogenförmige Schwenkbewegung y die Feststellvorrichtung 34 mit den Unterkanten 44 des Feststellhebels 42 entlang der bogenförmigen Konturen 45 des Tragteils 16 bewegt, bis dass die Feststellvorrichtung 34 in der vorgesehenen definierten Endposition im Tragteil 16 angeordnet ist.

In diesem Zusammenhang ist es jedoch wichtig, dass die Fadenschutzbauteile 15 zusätzlich zwei Anlageflächen 46 aufweisen, von denen jeweils eine in Abhängigkeit von der Richtung, in der die Feststellvorrichtung 34 am Rad 11 montiert wird, mit gegenüberliegenden, an der Feststellvorrichtung 34 angeordneten Anlageflächen 47 zusammenwirken. Konkret bedeutet dies, dass nach der Beendigung der Einschubbewegung zur Befestigung des Tragteils 16 am Rad 11 die vorgenannten Anlageflächen 46 des Fadenschutzes 15 und die Anlageflächen 47 der Feststellvorrichtung 34 vollflächig aneinander liegen, wobei die Feststellvorrichtung 34 zwischen einer Innenfläche I des Tragteils und den vorgenannten Anlageflächen 46 und 47 fest angeordnet ist. Bei Betätigung des Feststellhebels 42 ist jedoch in gewissen Grenzen eine Schwenkbewegung des Feststellelementes 35 einschließlich der Einrichtung zur Betätigung des Richtungsfeststellers 36 und der Einrichtung zur Betätigung des Radfeststellers 37 möglich, wobei der Halter 39 ortsfest gehalten ist. Diese Schwenkbewegung ist notwendig, damit einerseits der nicht dargestellte Richtungsfeststeller im Tragteil 16 und andererseits die teilweise dargestellte Radbremse betätigt werden können.

Letztlich kann - wie oben bereits beschrieben - die Einheit aus Tragteil 16 und Feststellvorrichtung 34 auf die gleiche Weise lösbar mit dem Rad 11 verrastet werden.

Insbesondere in der Fig. 7 erkennt man inmitten des Einschubbereiches des Fadenschutzes 15 eine dreiseitig freigeschnittene, federnde Lasche 48, welche mit einer dachförmigen Betätigungskontur 49 versehen ist. Rückseitig weist die Federlasche 48 auf nicht dargestellte Weise einen Verzahnungsbereich auf, der einer ringförmigen Verzahnung 50 der Felge 12 gegenüberliegt.

Die Feststellvorrichtung 34 ist der Einrichtung zur Betätigung des Radfeststellers 37 versehen. Die Einrichtung 37 weist auf nicht dargestellte Weise jeweils an der Innenfläche einen angeformten Betätigungsbereich auf" welcher im Montagezustand der dachförmigen Kontur 49 gegenüberliegt. Bei Betätigung des Feststellhebels 42 wird das Feststellelement 35um einen gewissen Winkelbetrag geschwenkt, wodurch der Betätigungsvorsprung gegen die dachförmige Betätigungskontur 49 wirkt und die Federlasche 48 mit dem auf nicht dargestellte Weise dahinter angeordneten Verzahnungsbereich in die Verzahnung 50 der Felge 12 drückt. Dadurch findet eine zuverlässige Radfeststellung statt.

Darüber hinaus führt die vorbeschriebene Schwenkung der Feststellvorrichtung 34 dazu, dass die Einrichtung 36 zur Richtungsfeststellung ebenfalls verschwenkt wird und nach dem Verschwenken in den nicht dargestellten Richtungsfeststeller eingreift, so dass auch eine Richtungsfeststellung erfolgt.

### Bezugszeichenliste

- 10: Einradrolle
- 11: Rad
- 12: Radfelge
- 13: Lauffläche
- 14: Befestigungsniet
- 15: Fadenschutz
- 16: Tragteil
- 17: Tragschenkel
- 18: Befestigungsbereich
- 19: Gegenbefestigungsbereich
- 20: Führungsrippen
- 21: Innenfläche Tragschenkel
- 22: Führungsleisten
- 23: Einführschräge
- 24: Radachse
- 25: Hinterschneidungsbereiche (gebogen)
- 26: Hinterschneidungsbereiche (Kragen)
- 27: Führungskontur (beidseitig)
- 28: Vorrastposition
- 29: Endrastposition
- 30: Verriegelungsflächen von 19
- 31: Rastvorsprünge
- 32: Zwischenraum
- 33: Abdeckung
- 34: Feststellvorrichtung
- 35: Feststellelement
- 36: Einrichtung zur Betätigung eines Richtungsfeststellers
- 37: Einrichtung zur Betätigung eines Radfeststellers
- 38: Befestigungsvorsprünge
- 39: Halter
- 40: Rastöffnungen
- 41: Rastvorsprünge
- 42: Feststellhebel
- 43: Rastvertiefungen
- 44: Unterkante des Feststellhebels 42
- 45: bogenförmige Kontur von 16
- 46: Anlageflächen von 15
- 47: Anlageflächen von 34
- 48: Federlasche
- 49: dachförmige Betätigungskontur
- 50: Verzahnung Felge

- x: Einschubrichtung
- y: bogenförmige Schwenkbewegung
- N: Radnabe
- V: leistenartiger Vorsprung
- I: Innenfläche von 16
- D: Durchbrechungen

## Patentansprüche

1. Einradrolle (10) mit einem Tragteil (16), im Wesentlichen bestehend aus einem Kopfteil und einem Fußteil, welches mindestens einen Tragschenkel (17) aufweist, das Fußteil wenigstens eine Nabe für das Rad (11) aufnimmt, auf der Nabe ein Fadenschutz (15) angeordnet ist und zwischen Rad (11) und Tragteil (16) eine Feststellvorrichtung (34) angeordnet ist, wobei die Feststellvorrichtung (34) im Innenraum des Tragteils (16) zwischen wenigstens einer Innenfläche (I) des Tragteils (16) und mindestens einer undrehbar am Rad (11) angeordneten Anlagefläche (46), die nach der Endmontage an der Feststellvorrichtung (34) fest anliegt, befestigungsmittellos angeordnet ist und die Anlagefläche (46) am Fadenschutz (15) angeordnet ist.

2. Einradrolle nach Anspruch 1, **dadurch gekennzeichnet, dass** die Feststellvorrichtung (34) aus einem Radfeststeller (37) und/oder einem Richtungsfeststeller (36) gebildet wird.

3. Einradrolle nach einem der Ansprüche 1 oder 2, **dadurch gekennzeichnet, dass** die Feststellvorrichtung (34) aus einem Halter (39), einem Feststellelement (35) und einem Feststellhebel (42) gebildet wird, wobei das Feststellelement (35) und der Feststellhebel (42) befestigungsmittellos am Halter (39) rastbefestigt ist.

4. Einradrolle nach Anspruch 3, **dadurch gekennzeichnet, dass** die Feststellvorrichtung (34) während der Montage der Einradrolle (10) befestigungsmittellos zwischen dem Tragteil (16) und dem Fadenschutz (15) befestigbar ist.

5. Einradrolle nach einem der vorangehenden Ansprüche, **dadurch gekennzeichnet, dass** die Tragschenkel (17) des Tragteils (16) jeweils eine Kontur (45) zur Führung der Feststellvorrichtung (34) aufweisen, in deren Bereich die Feststellvorrichtung (34) in den Innenraum (I) des Tragteiles (16) teilweise einführbar und durch eine Schwenkbewegung entlang der Konturen (45) in eine definierte Endposition bewegbar ist.

## Claims

1. Single wheel caster (10) with a supporting part (16) substantially comprising a top part and a base part, which has at least one support arm (17), the base part accommodating at least one hub for the wheel (11), a thread guard (15) being disposed on the hub and a locking device (34) being disposed between the wheel (11) and supporting part (16), wherein
the locking device (34) is disposed without additional fixing means in the interior of the supporting part (16) between at least an internal face (I) of the supporting part (16) and at least one non-rotatable contact surface (46) disposed on the wheel (11) which sits firmly against the locking device (34) after being finally assembled, and the contact surface (46) is disposed on the thread guard (15).

2. Single wheel caster as claimed in claim 1, **characterised in that** the locking device (34) comprises a wheel locking device (37) and/or a direction locking device (36).

3. Single wheel caster as claimed in one of claims 1 or 2, **characterised in that** the locking device (34) comprises a holder (39), a lock element (35) and a lock lever (42) and the lock element (35) and lock lever (42) are secured on the holder (39) by latching without additional fixing means.

4. Single wheel caster as claimed in claim 3, **characterised in that** the locking device (34) can be secured between the supporting part (16) and thread guard (15) without additional fixing means whilst the single wheel caster (10) is being assembled.

5. Single wheel caster as claimed in one of the preceding claims, **characterised in that** the support arms (17) of the supporting part (16) each have a contour (45) for guiding the locking device (34), in the region of which the locking device (34) can be partially inserted in the interior (I) of the supporting part (16) and can be moved by a pivoting movement along the contours (45) into a defined end position.

## Revendications

1. Rouleau à galet simple (10) avec une partie de support (16), constitué principalement d'une partie tête et d'une partie pied, qui présente au moins un bras de support (17), la partie pied accueillant au moins un moyeu pour la roue (11 ), un pare-fil (15) étant disposé sur le moyeu et un dispositif d'arrêt (34) étant disposé entre la roue (11) et la partie de support (16), le dispositif d'arrêt (34) étant disposé à l'intérieur de la partie de support (16) entre au moins une surface intérieure (I) de la partie de support (16) et au moins une surface d'appui (46) disposée, immobile en rotation, au niveau de la roue (11) qui est disposée après montage final, de manière fixe, sur le dispositif d'arrêt (34), sans utilisation de moyens de fixation et la surface d'appui (46) étant disposée au niveau du pare-fil (15).

2. Rouleau à galet simple selon la revendication 1, **caractérisé en ce que** le dispositif d'arrêt (34) est formé d'un dispositif de blocage de roue (37) et/ou d'un dispositif de blocage directionnel (36).

3. Rouleau à galet simple selon l'une des revendications 1 ou 2, **caractérisé en ce que** le dispositif d'arrêt (34) est formé d'un appui (39), d'un élément d'immobilisation (35) et d'un levier d'immobilisation (42), l'élément d'immobilisation (35) et le levier d'immobilisation (42) étant fixés par encliquetage sans utilisation de moyens de fixation au niveau de l'appui (39).

4. Rouleau à galet simple selon la revendication 3, **caractérisé en ce que** le dispositif d'arrêt (34) peut être fixé pendant le montage du rouleau à galet simple (10) sans utilisation de moyens de fixation entre la partie de support (16) et le pare-fil (15).

5. Rouleau à galet simple selon l'une des précédentes revendications, **caractérisé en ce que** les bras de support (17) de la partie de support (16) présentent respectivement un contour (45) pour guider le dispositif d'arrêt (34), dans la zone duquel le dispositif d'arrêt (34) peut en partie être introduit dans l'espace intérieur (1) de la partie de support (16) et peut être mobile grâce à un mouvement de pivotement le long des contours (45) dans une position finale définie.
